# EUROPÄISCHE PATENTSCHRIFT

(11) **EP 0 718 163 B1**
(45) Veröffentlichungstag und Bekanntmachung des Hinweises auf die Patenterteilung: **17.11.1999**
(21) Anmeldenummer: 95120024.5
(22) Anmeldetag: 19.12.1995
(51) Int. Cl.: B60R 22/28, F16F 7/12

(54) **Kraftbegrenzer für Fahrzeug-Sicherheitsgurtsysteme**
Force limiter for vehicle seatbelt systems
Limiteur de force pour systèmes de ceintures de sécurité de véhicules

(30) Priorität: 19.12.1994 DE 4445322
(43) Veröffentlichungstag der Anmeldung: 26.06.1996
(73) Patentinhaber: TRW Occupant Restraint Systems GmbH & Co. KG, 73551 Alfdorf (DE)
(72) Erfinder: Bock, Heinz, D-73540 Heubach (DE)
(74) Vertreter: Degwert, Hartmut, Dipl.-Phys.

(56) Entgegenhaltungen:
- DE-A- 1 506 641
- DE-U- 9 416 120
- US-A- 3 195 685
- US-A- 3 486 791
- US-A- 4 027 905

## Beschreibung

Die Erfindung betrifft einen Kraftbegrenzer für Kraftfahrzeug-Sicherheitsgurtsysteme, der mittels zweier Beschlagteile in den Kraftflußweg des Sicherheitsgurtsystems eingefügt ist, wobei der Abstand zwischen den Beschlagteilen unter Energiewandlung vergrößert werden kann, ein erstes der Beschlagteile fest mit einem Metallrahmen verbunden ist, in dem ein Bolzen angebracht ist, ein zweites der Beschlagteile fest mit einem ersten Ende eines Metallstreifens verbunden ist, der auf einer erzwungenen Bahn um den Bolzen geführt ist.

Ein solcher gattungsgemäßer Kraftbegrenzer ist aus der DE-U-9416120 bekannt und wird in Sicherheitsgurtsystemen dazu verwendet, die bei einem Unfall auftretenden Gurtband-Lastspitzen auf ein für einen Fahrzeuginsassen unbedenkliches Maß zu vermindern, indem sich der Kraftbegrenzer bei einer einen vorgegebenen Schwellenwert überschreitenden, über das Gurtband eingeleiteten Zugkraft unter Energiewandlung verformt. Beispielsweise kann ein solcher Energiewandler zwischen einem Befestigungspunkt an der Fahrzeugkarosserie und dem Gurtschloß des Sicherheitsgurtsystems vorgesehen sein.

Ein wichtiges Kriterium bei der Auslegung eines solchen Kraftbegrenzers ist zum einen der Schwellenwert, ab dem der Kraftbegrenzer wirkt, und zum anderen die Kennlinie von zwischen den Beschlagteilen wirkender Kraft über der Längenänderung zwischen den beiden Beschlagteilen. In Abhängigkeit von der Gesamtkonzeption des Insassenrückhaltesystems und von dem Deformationsverhalten des Fahrzeugs können hier verschiedene Kennlinien vorteilhaft sein, beispielsweise Kennlinien mit einem hohen Schwellenwert und anschließend konstantem Kraftverlauf über dem Verformungsweg oder Kennlinien mit einem niedrigen Schwellenwert und einem progressiven Kraftverlauf. Gleichzeitig ist darauf zu achten, daß der Kraftbegrenzer so dimensioniert ist, daß er am Ende des konstruktiv vorgesehenen Verformungsweges eine ausreichende Festigkeit aufweist.

Ein weiteres Kriterium ist die sichere Begrenzung des Verformungsweges am Ende der Kraftbegrenzung. Bei dem aus der DE-U-94 16 120 bekannten Kraftbegrenzer sind aufwendige Haltelappen zur Begrenzung des Bewegungspfades vorgesehen, die ein vollständiges Herausziehen des Metallstreifens aus dem Metallrahmen verhindern sollen.

Aus der US-A-4 027 905 ist ein Kraftbegrenzer mit einem über mehrere Umlenkbolzen verformbaren Metallstreifen bekannt, bei dem zur Begrenzung des Verformungsweges das freie Ende des Metallstreifens umgebogen ist, so daß sich durch die dadurch erreichte Verdickung das Ende des Metallstreifens am Ende des Verformungsweges zwischen den Umlenkbolzen verklemmt. Dies erfordert jedoch, daß der Abstand zwischen den Bolzen und die Dicke des Metallstreifens genau angepaßt sein müssen, da ansonsten das verdickte Ende des Metallstreifens bei hoher Krafteinwirkung dennoch zwischen den Umlenkbolzen hindurchgezogen werden kann. Auch besteht das Risiko, daß das umgebogene Ende des Metallstreifens wieder aufgebogen wird, so daß keine Begrenzung des Verformungsweges mehr erfolgen kann.

Die Aufgabe der Erfindung besteht darin, einen Kraftbegrenzer zu schaffen, bei dem der Schwellenwert, ab dem der Kraftbegrenzer wirkt, und die Kennlinie von Zugkraft über Verformungsweg in einem großen Bereich frei wählbar sind und gleichzeitig der Verformungsweg zuverlässig begrenzt ist.

Diese Aufgabe wird bei einem Kraftbegrenzer der eingangs genannten Art durch die Merkmale des Patentanspruchs 1 gelöst. Diese Ausbildung des Kraftbegrenzers ermöglicht durch Gestaltung des Metallstreifens, die Kennlinie des erfindungsgemäßen Kraftbegrenzers in einem weiten Bereich frei und im wesentlichen unabhängig von dem Schwellenwert zu wählen, ab dem der Kraftbegrenzer wirkt, und gewährleistet gleichzeitig eine sichere Begrenzung des Verformungsweges.

Vorteilhafte Ausgestaltungen des Kraftbegrenzers sind in den Unteransprüchen angegeben.

Die bevorzugte Ausführung der Erfindung wird nachfolgend unter Bezugnahme auf die beigefügte Zeichnung beschrieben. In dieser zeigen:
- Fig. 1: einen erfindungsgemäßen Kraftbegrenzer in einer schematischen teilgeschnittenen Seitenansicht;
- Fig. 2: einen Metallstreifen des Kraftbegrenzers von Fig. 1 im abgewickelten Zustand;
- die Figuren 3, 4 und 5: verschiedene Gestaltungen des in Figur 1 mit A bezeichneten Abschnittes des Metallstreifens sowie die zugehörigen Kennlinien; und
- die Figuren 6a und 6b: verschiedene Gestaltungen des zweiten Endes des Metallstreifens.

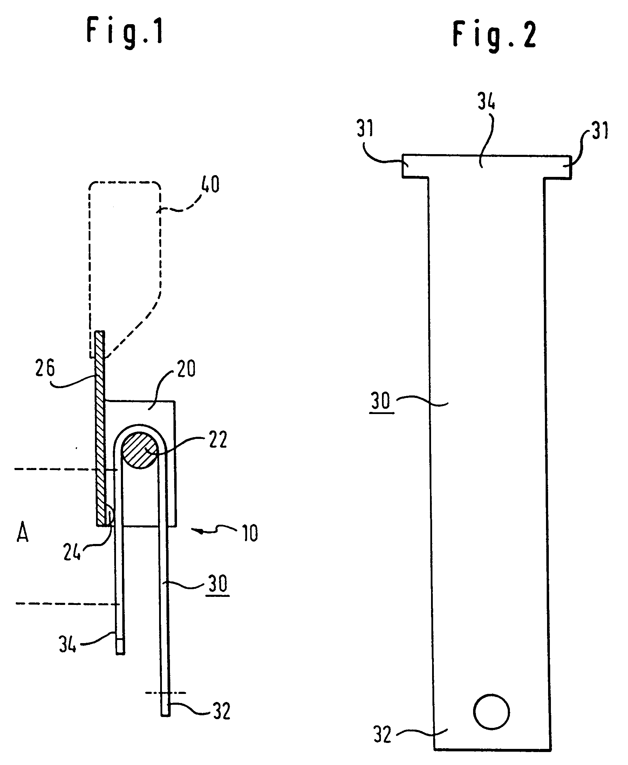

In Figur 1 ist ein erfindungsgemäßer Kraftbegrenzer 10 in einer teilgeschnittenen schematischen Seitenansicht dargestellt. Der Kraftbegrenzer 10 umfaßt einen Metallrahmen 20, der vorzugsweise als Blechbiegeteil ausgebildet ist. Der Metallrahmen 20 weist eine U-förmige Gestalt auf, von der in Figur 1 der hinter der Schnittebene liegende Schenkel sowie der geschnittene Mittelteil zu sehen sind. Der Mittelteil ist mit einem Fortsatz versehen, der als erstes Beschlagteil 26 ausgebildet ist, an dem ein in Figur 1 gestrichelt und schematisch dargestelltes Gurtschloß 40 befestigt ist. Auf der zu dem Gurtschloß 40 entgegengesetzten Seite ist der Mittelteil des Metallrahmens 20 mit einer Abstützung 24 versehen, deren Funktion später beschrieben wird.

Zwischen den beiden Schenkeln des Metallrahmens 20 ist ein Bolzen 22 angebracht. Um diesen Bolzen 22 ist ein Metallstreifen 30 derart geführt, daß er zwischen seinem als Beschlagteil 32 ausgebildeten ersten Ende und seinem zweiten Ende 34 um im wesentlichen 180° umgelenkt ist. Zwischen dem zweiten Ende 34 des Metallstreifens 30 und dem um den Bolzen 22 umgelenkten Abschnitt des Metallstreifens 30 greift die an dem Mittelteil des Metallrahmens 20 angebrachte Abstützung 24 auf der zu dem Bolzen entgegengesetzten Seite des Metallstreifens 30 an. Um zu verhindern, daß der Metallstreifen 30 vollständig aus dem Metallrahmen 20 herausgezogen werden kann, ist das zweite Ende 34 des Metallstreifens 30 auf seinen schmalen Seiten mit Vorsprüngen 31 versehen (siehe Fig. 2), die gegen Ende des Verformungsweges des Kraftbegrenzers 10 an dem Metallrahmen in Anlage geraten und so den Verformungsweg begrenzen. Der Metallstreifen 30 ist vorzugsweise ein Blechstanzteil.

Der Kraftbegrenzer 10, der über seine beiden Beschlagteile 26, 32 in den Kraftflußweg des Sicherheitsgurtsystems eingefügt ist, wirkt bei einem Unfall in der folgenden Weise: Wenn die zwischen den beiden Beschlagteilen 26, 32 wirksame Zugkraft einen vorbestimmten Schwellenwert überschreitet, wird die Summe aus der zwischen dem Metallstreifen 30 und dem Bolzen 22 wirkenden Reibungskraft und der von dem Biegewiderstand des Metallstreifens 30 erzeugten Hemmkraft überwunden, woraufhin der Metallstreifen 30 von dem zweiten Beschlagteil 32 um den Bolzen 22 herum bezüglich Fig. 1 nach unten durch den Metallrahmen 20 gezogen wird. Bei diesem Vorgang führt die Abstützung 24 zusammen mit der am zweiten Beschlagteil 32 angreifenden Zugkraft den Metallstreifen 30 auf einer erzwungenen Bahn. Durch die Bewegung des Metallstreifens 30 durch den Metallrahmen 20 erhöht sich der Abstand zwischen den beiden Beschlagteilen 26, 32 unter Energiewandlung aufgrund von plastischer Verformung und Reibungswärme, wodurch die zwischen den Beschlagteilen wirksame Zugkraft auf ein konstruktiv vorgegebenes Maß begrenzt werden kann, deren Verlauf über dem Verformungsweg als Kennlinie darstellbar ist.

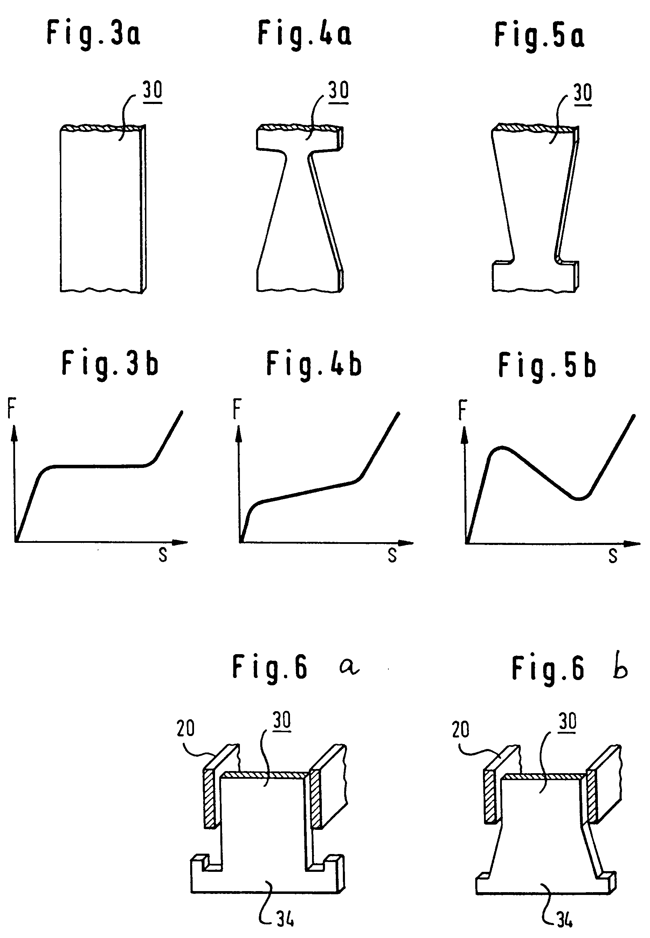

Die Kennlinie des Verlaufes von Zugkraft über Verformungsweg läßt sich in besonders einfacher Weise mittels der Gestaltung des in Fig. 1 mit A bezeichneten Bereichs des Metallstreifens 30 beeinflussen. In den Figuren 3a bis 5a sind verschiedene Gestaltungen für diesen Bereich des Metallstreifens 30 und in den Figuren 3b bis 5b die sich aus diesen Gestaltungen ergebenden Kennlinien dargestellt. In Figur 3a ist der Metallstreifen 30 im Bereich A mit konstanter Breite ausgebildet, so daß sich nach Erreichen des Schwellenwertes der Zugkraft zwischen den beiden Beschlagteilen eine im wesentlichen konstante Kraft F über dem Verformungsweg s ergibt, bis die Zugkraft F gegen Ende des Verformungsweges s aufgrund des Zusammenwirkens des zweiten Endes 34 des Metallstreifens 30 mit dem Metallrahmen 20 steil ansteigt (siehe Fig. 3b).

In Figur 4a ist der Metallstreifen 30 im Bereich A mit zwischen dem an dem Bolzen 22 anliegenden Abschnitt und dem zweiten Ende 34 zunehmender Breite ausgebildet, so daß sich ein relativ niedriger Schwellenwert der Zugkraft einstellt. Wie in Fig. 4b zu sehen ist, steigt nach Erreichen dieses Schwellenwertes die Zugkraft F über dem Verformungsweg s stetig an, bis in gleicher Weise wie bei der Ausführungsform nach Figur 3 die Kraft gegen Ende des Verformungsweges s stark zunimmt.

In Figur 5a ist der Metallstreifen 30 im Bereich A mit zwischen dem an dem Bolzen 22 anliegenden Abschnitt und dem zweiten Ende 34 abnehmender Breite dargestellt. Durch diese Gestaltung ergibt sich ein relativ hoher Schwellenwert der Zugkraft zwischen den Beschlagteilen, bis der Kraftbegrenzer wirksam wird, wobei nach Erreichen dieses Schwellenwertes die Zugkraft F über dem Verformungsweg s abnimmt. Daran schließt sich in der gleichen Weise wie bei den Ausführungsformen nach den Figuren 3 und 4 die von dem Zusammenwirken des zweiten Ende 34 des Metallstreifens 30 mit dem Metallrahmen 20 bewirkte Erhöhung der Zugkraft gegen Ende des Verformungsweges an.

Die Funktion der weiter oben beschriebenen Vorsprünge kann auch von anderen Gestaltungen des zweiten Endes 34 des Metallstreifens 30 übernommen werden. Beispiele für eine solche Gestaltung sind in den Figuren 6a und 6b dargestellt. Hierbei entspricht die in Figur 6a dargestellte Gestaltung ungefähr der Ausführungsform nach Fig. 2, jedoch sind die am zweiten Ende 34 des Metallstreifens 30 ausgebildeten Vorsprünge zusätzlich mit zwei hakenförmigen Fortsätzen versehen. Bei dieser Ausführungsform wird ebenso wie bei der Ausführungsform nach Fig. 2 der Verformungsweg des Kraftbegrenzers durch Anlage von quer zur Bewegungsrichtung des Metallstreifens 30 ausgebildeten Vorsprüngen an dem Metallrahmen 20 begrenzt.

Bei der in Figur 6b dargestellten Gestaltung wird der Verformungsweg des Kraftbegrenzungsgliedes 10 durch eine Klemmwirkung zwischen dem Ende 34 des Metallstreifens 30 und dem Metallrahmen 20 erzielt.

In Figur 6b ist eine Ausführungsform dargestellt, bei der die Breite des Metallstreifens 30 an dessen Ende 34 zunehmend anwächst. Gegen Ende des Verformungsweges ergibt sich somit zwischen den Stegen des U-förmigen Metallrahmens 20 und dem Metallstreifen 30 eine Klemmwirkung, die einem weiteren Herausziehen des Metallstreifens 30 aus dem Metallrahmen 20 einen steigenden Widerstand entgegensetzt. Im Gegensatz zu den Ausführungsformen nach den Figuren 2 und 6a, bei denen der Verformungsweg nach Art eines Anschlages begrenzt wird, wird bei der Ausführungsform nach Figur 6b der Verformungsweg des Kraftbegrenzers relativ sanft begrenzt.

## Patentansprüche

1. Kraftbegrenzer für Kraftfahrzeug-Sicherheitsgurtsysteme, der mittels zweier Beschlagteile (26, 32) in den Kraftflußweg des Sicherheitsgurtsystems eingefügt ist, wobei der Abstand zwischen den Beschlagteilen (26, 32) unter Energiewandlung vergrößert werden kann, ein erstes (26) der Beschlagteile fest mit einem Metallrahmen (20) verbunden ist, in dem ein Bolzen (22) angebracht ist, ein zweites (32) der Beschlagteile fest mit einem ersten Ende (32) eines Metallstreifens (30) verbunden ist, der auf einer erzwungenen Bahn um den Bolzen (22) geführt ist, dadurch gekennzeichnet, daß das zweite Ende (34) des Metallstreifens (30) mit seitlich abragenden Vorsprüngen (31) auf den schmalen Seiten des Metallstreifens (30) versehen ist, die ein vollständiges Herausziehen des Metallstreifens (30) aus dem Metallrahmen (20) verhindern.

2. Kraftbegrenzer nach Anspruch 1, dadurch gekennzeichnet, daß der Metallstreifen (30) zwischen dem ersten Ende und dem zweiten Ende (34) um im wesentlichen 180° umgelenkt ist.

3. Kraftbegrenzer nach Anspruch 2, dadurch gekennzeichnet, daß innerhalb des Metallrahmens (20) eine Abstützung (24) für den Metallstreifen (30) vorgesehen ist, die zwischen dessen zweitem Ende (34) und dem an dem Bolzen (22) anliegenden Abschnitt auf der zu dem Bolzen entgegengesetzen Seite des Metallstreifens (30) angreifen kann.

4. Kraftbegrenzer nach einem der Ansprüche 1 bis 3, dadurch gekennzeichnet, daß die Breite des Metallstreifens (30) zwischen dem an dem Bolzen (22) anliegenden Abschnitt und dem zweiten Ende (34) konstant ist.

5. Kraftbegrenzer nach einem der Ansprüche 1 bis 3, dadurch gekennzeichnet, daß die Breite des Metallstreifens (30) zwischen dem an dem Bolzen (22) anliegenden Abschnitt und dem zweiten Ende (34) zunimmt.

6. Kraftbegrenzer nach einem der Ansprüche 1 bis 3, dadurch gekennzeichnet, daß die Breite des Metallstreifens (30) zwischen dem an dem Bolzen (22) anliegenden Abschnitt und dem zweiten Ende (34) abnimmt.

7. Kraftbegrenzer nach einem der vorhergehenden Ansprüche, dadurch gekennzeichnet, daß die Dicke des Metallstreifens (30) konstant ist.

8. Kraftbegrenzer nach einem der vorhergehenden Ansprüche, dadurch gekennzeichnet, daß das erste Beschlagteil (26) einteilig mit dem Metallrahmen (20) ausgebildet ist.

9. Kraftbegrenzer nach einem der vorhergehenden Ansprüche, dadurch gekennzeichnet, daß das zweite Beschlagteil (32) einteilig mit dem Metallstreifen (30) ausgebildet ist.

10. Kraftbegrenzer nach einem der vorhergehenden Ansprüche, dadurch gekennzeichnet, daß der Metallstreifen (30) ein Blechstanzteil ist.

11. Kraftbegrenzer nach einem der vorhergehenden Ansprüche, dadurch gekennzeichnet, daß der Metallrahmen (20) ein Blechbiegeteil ist.

## Claims

1. A force limiter for motor vehicle safety belt systems, which is inserted in the force flow path of the safety belt system by means of two fittings (26, 32), the distance between the fittings (26, 32) being able to be increased with conversion of energy, a first one (26) of the fittings being firmly connected with a metal frame (20) in which a pin (22) is mounted, and a second one (32) of the fittings being firmly connected with a first end (32) of a metal strip (30) which is adapted to be guided about the pin (22) along a forcibly set path, characterized in that the second end (34) of the metal strip (30) is provided with lateral projections (31) on the narrow sides of the metal strip (30), which prevent a complete withdrawal of the metal strip (30) from the metal frame (20).

2. The force limiter as claimed in claim 1, characterized in that between the first end and the second end (34) thereof the metal strip (30) is deflected through substantially 180°.

3. The force limiter as claimed in claim 2, characterized in that within the metal frame (20) a support (24) for the metal strip (30) is provided, which between the second end (34) of the metal strip and the section resting against the pin (22) is able to engage the side of the metal strip (30) opposite to the pin.

4. The force limiter as claimed in any one of claims 1 to 3, characterized in that the width of the metal strip (30) is constant between the section resting against the pin (22) and the second end (34).

5. The force limiter as claimed in any one of claims 1 to 3, characterized in that the width of the metal strip (30) increases between the section resting against the pin (22) and the second end (34).

6. The force limiter as claimed in any one of claims 1 to 3, characterized in that the width of the metal strip (30) decreases between the section resting against the pin (22) and the second end (34).

7. The force limiter as claimed in any one of the preceding claims, characterized in that the thickness of the metal strip (30) is constant.

8. The force limiter as claimed in any one of the preceding claims, characterized in that the first fitting (26) is formed integrally with the metal frame (20).

9. The force limiter as claimed in any one of the preceding claims, characterized in that the second fitting (32) is formed integrally with the metal strip (30).

10. The force limiter as claimed in any one of the preceding claims, characterized in that the metal strip (30) is a stamped sheet metal part.

11. The force limiter as claimed in any one of the preceding claims, characterized in that the metal frame (20) is a bent sheet metal part.

## Revendications

1. Limiteur de force destiné à des systèmes de ceinture de sécurité de véhicules automobiles, inséré sur le trajet du flux de forces du système de ceinture de sécurité au moyen de deux ferrures (26, 32), l'écartement entre les ferrures (26, 32) pouvant être augmenté moyennant une conversion d'énergie, une première (26) des ferrures étant solidaire d'un cadre métallique (20) dans lequel est logé un axe (22), une seconde (32) des ferrures étant solidaire d'une première extrémité (32) d'une bande métallique (30) qui passe autour de l'axe (22) en suivant un tracé imposé, caractérisé en ce que la seconde extrémité (34) de la bande métallique (30) est munie, sur les côtés étroits de la bande métallique (30), de saillies (31) dépassant latéralement, qui interdisent un retrait complet de la bande métallique (30) hors du cadre métallique (20).

2. Limiteur de force selon la revendication 1, caractérisé en ce que, entre la première extrémité et la seconde extrémité (34), la bande métallique (30) est déviée en substance de 180°.

3. Limiteur de force selon la revendication 2, caractérisé en ce que, à l'intérieur du cadre métallique (20) est prévu, pour la bande métallique (30), un moyen d'appui (24) qui peut agir, sur la face de la bande métallique (30) opposée à l'axe, entre la seconde extrémité (34) de ladite bande métallique et la portion appliquée contre l'axe (22).

4. Limiteur de force selon l'une des revendications 1 à 3, caractérisé en ce que la largeur de la bande métallique (30) entre la portion appliquée contre l'axe (22) et la seconde extrémité (34) est constante.

5. Limiteur de force selon l'une des revendications 1 à 3, caractérisé en ce que la largeur de la bande métallique (30) entre la portion appliquée contre l'axe (22) et la seconde extrémité (34) augmente.

6. Limiteur de force selon l'une des revendications 1 à 3, caractérisé en ce que la largeur de la bande métallique (30) diminue entre la portion appliquée contre l'axe (22) et al seconde extrémité (34).

7. Limiteur de force selon l'une des revendications précédentes, caractérisé en ce que l'épaisseur de la bande métallique (30) est constante.

8. Limiteur de force selon l'une des revendications précédentes, caractérisé en ce que la première ferrure (26) est conçue d'un seul tenant avec le cadre métallique (20).

9. Limiteur de force selon l'une des revendications précédentes, caractérisé en ce que la seconde ferrure (32) est conçue d'un seul tenant avec la bande métallique (30).

10. Limiteur de force selon l'une des revendications précédentes, caractérisé en ce que la bande métallique (30) est une pièce en tôle estampée.

11. Limiteur de force selon l'une des revendications précédentes, caractérisé en ce que le cadre métallique (20) est une pièce en tôle cintrée.
